(19) Europäisches Patentamt

European Patent Office

Office européen des brevets

(11) **EP 0 684 447 B1**

(12) **EUROPÄISCHE PATENTSCHRIFT**

(45) Veröffentlichungstag und Bekanntmachung des Hinweises auf die Patenterteilung:
**17.09.2003 Patentblatt 2003/38**

(51) Int Cl.[7]: **G01B 21/04**

(21) Anmeldenummer: **95107108.3**

(22) Anmeldetag: **11.05.1995**

(54) **Koordinatenmessung an Werkstücken mit einer Korrektur des durch die Messkraft abhängigen Biegeverhaltens des Koordinatenmessgerätes**

Coordinate measurement on workpieces with a correction of the bending behaviour of the coordinate measuring machine dependent on the measuring force

Mesure de coordonnées d'objets avec correction du compartement en flexion de la machine de mesure de coordonnées qui est dépendant de la force de mesure

(84) Benannte Vertragsstaaten:
**DE FR GB IT**

(30) Priorität: **27.05.1994 DE 4418550**

(43) Veröffentlichungstag der Anmeldung:
**29.11.1995 Patentblatt 1995/48**

(73) Patentinhaber:
- **Carl Zeiss**
  **89518 Heidenheim (Brenz) (DE)**
  Benannte Vertragsstaaten:
  **DE FR IT**
- **Carl-Zeiss-Stiftung, trading as Carl Zeiss**
  **89518 Heidenheim (Brenz) (DE)**
  Benannte Vertragsstaaten:
  **GB**

(72) Erfinder:
- **Trapet, Eugen, Dr. Ing.**
  **D-38176 Bortfeld (DE)**
- **Wiegand, Uwe**
  **D-38114 Braunschweig (DE)**
- **Grupp, Günter**
  **D-89558 Böhmenkirch (DE)**
- **Bernhardt, Ralf**
  **D-73431 Aalen (DE)**

(56) Entgegenhaltungen:
**EP-A- 0 438 095      US-A- 4 333 238**

**Beschreibung**

Die Erfindung betrifft ein Verfahren und ein Koordinatenmessgerät zur Koordinatenmessung an Werkstücken mit einem KMG (Koordinatenmeßgerät), bei dem die ermittelten Meßwerte mit gespeicherten Korrekturwerten verrechnet werden.

Zur Erhöhung der Meßgenauigkeit von KMG werden bereits seit geraumer Zeit die Meßergebnisse, d.h. die Koordinatenmeßwerte, die von den Maßstäben in den Meßachsen der Maschine geliefert werden, mit rechnerischen Korrekturen versehen. In der Regel werden Korrekturen berücksichtigt, die sich aus den nach dem sogenannten "starren Modell" abgeleiteten statischen Abweichungen der Führungen der Meßschlitten des KMG von einem geradlinigen und rechtwinkligen Koordinatensystem ergeben. Derartige Korrekturverfahren sind beispielsweise beschrieben in dem Artikel "Numerical Error Correction of a Coordinate Measuring Machine" von K. Busch, H. Kunzmann und F. Wäldele in den Proceedings of the International Symposium on Metrology for Quality Control in Production, Tokyo 1984, Seite 284 - 288 sowie in der US-PS 48 19 195.

Des weiteren ist es bekannt, bei berührend antastenden Koordinatenmeßgeräten die Biegung des Taststifts während des Kontakts mit dem zu vermessenden Werkstück größenmäßig zu erfassen und bei der anschließenden Auswertung der Meßwerte mit zu berücksichtigen. Ein solches Verfahren ist beispielsweise beschrieben in dem Artikel "Korrektur der Taststiftbiegung bei Messungen mit Mehrkoordinaten-Meßgeräten" von A. Weckenmann, G. Goch und H.D. Springborn, in Feinwerktechnik und Meßtechnik 87 (1979) 1, Seite 5 - 9 sowie in dem Artikel "Messende Taster mit mehreren Freiheitsgraden" von W. Lotze in Technische Rundschau Heft 50 (1992) Seite 20 - 25.

Bei diesem Verfahren wird der Biegetensor für den jeweiligen Taststift durch mehrfaches Antasten einer Kalibrierkugel mit unterschiedlichen Meßkräften bestimmt Hieraus werden dann Korrekturwerte für die verschiedenen bei der Messung an einem Werkstück benutzten Taststifte berechnet und gespeichert und im Zuge der Auswertung der Meßergebnisse bei der Vermessung von unbekannten Werkstücken dann mit berücksichtigt.

Es ist des weiteren bekannt, die dynamischen Abweichungen der Meßschlitten eines KMG zu korrigieren, d. h. die Fehler die auftreten, weil der am Ende des Meßarms angebrachte Tastkopf des KMG nicht in Ruhe ist sondern durch Störeinflüsse wie z.B. die Beschleunigung der Antriebe etc. um seine Ruhelage schwingt. Ein solches Korrekturverfahren ist beispielsweise in der US-PS 43 33 238 beschrieben. Derartige dynamische Korrekturverfahren verwenden Sensoren, die in der Nähe des schwingenden Tastkopfs angeordnet sind und Signale abgeben, die den Verlauf der Störschwingung zum Antastzeitpunkt repräsentieren.

Schließlich sind in den beiden Dissertationen der Universität Eindhoven von J.W.U.C. Teeuwsen vom 27. Januar 1989, siehe dort Kapitel 3, und von H. Soons vom 16. Juni 1993, siehe dort Seite 85-91, Fehlereinflüsse in einem als elastisch nachgiebig modellierten Koordinatenmeßgerät untersucht worden. Die Autoren betrachten jedoch nur die Masseverlagerungen aufgrund der bewegten Meßschlitten als Fehlerursache und lassen den Einfluß der zwischen Werkstück und Meßgerät auftretenden Meß- bzw. Antastkraft außer Betracht.

Da nun aber KMG zur Erzielung von immer höheren Meßgeschwindigkeiten zunehmend leichter gebaut werden, gewinnen die elastischen Deformationen der Meßschlitten aufgrund der Antastkraft zwischen Taster und Werkstück zunehmende Bedeutung. Diese Deformationen hängen von der Ausfahrlänge der Meßschlitten des KMG ab und verursachen deshalb abhängig von der Stellung des Tastkopfs im Meßbereich der Maschine unterschiedlich große Abweichungen der Koordinatenmeßwerte.

Es ist die Aufgabe der Erfirtdung die Meßfehler von Koordinatenmeßgeräten weiter zu reduzieren und damit die Meßgenauigkeit derartiger Instrumente zu erhöhen. Diese Aufgabe wird mit den im Anspruch 1 angegebenen Maßnahmen gelöst, sowie mit dem Anspruch 15.

Das neue Verfahren berücksichtigt also erstmalig die Nachgiebigkeit und das elastische Verhalten der Aufbauten und Meßschlitten des KMG bzw. deren Nachgiebigkeit aufgrund der beim Antastvorgang vom Werkstück auf den Tastkopf des KMG ausgeübten Kräfte. Diese sind zwar relativ klein und obwohl auch die dadurch hervorgerufenen Deformationen des Maschinenaufbaus nur gering sind, können sie doch als Meßfehler in Erscheinung treten, wenn die Meßunsicherheit des KMG im Bereich weniger µm spezifiziert ist.

Mit dem Korrekturverfahren gemäß der Erfindung wird das elastische Biegeverhalten des KMG's für mehrere Stellungen des Tasters im Meßbereich des KMG bestimmt. Aus den Meßwerten für das Biegeverhalten werden dann Korrekturwerte berechnet, gespeichert und von der Meßsoftware des Gerätes anschließend bei der Vermessung unbekannter Werkstücke mit den z.B. von den Maßstäben des KMG gelieferten Koordinatenmeßwerten der Antastpunkte und der eingestellten Meßkraft verrechnet. Auf diese Weise läßt sich nicht nur die Meßunsicherheit von bereits existierenden KMG verringern. Die neue Art der Korrektur erlaubt es außerdem, KMG zukünftig leichter zu bauen, da die mit der Leichtbauweise einhergehende höhere elastische Verformung der Maschine rechnerisch kompensiert werden kann.

Es ist zweckmäßig, die das Biegeverhalten charakterisierten Korrekturwerte als mehrdimensionale Korrekturtabelle zu erstellen und abzuspeichern, wobei dann bei der eigentlichen Korrektur der Meßwerte des Werkstück auch zwischen den gespeicherten Korrekturwerten interpoliert werden kann. Die Interpolation erlaubt es, die Anzahl der zu speichernden Korrekturwerte der Tabelle gering zu halten.

Es ist jedoch auch möglich, die Ortsabhängigkeit der das Biegeverhalten charakterisierenden Korrekturwerte durch mathematische Funktionen, beispielsweise Polynome anzunähern. In diesem Falle ist es lediglich erforderlich, die Koeffizienten dieser Näherungsfunktionen abzuspeichern.

Da die Biegung des Maschinenaufbaus eines KMG ebenso wie die Biegung des Taststifts durch einen Biegetensor beschrieben werden kann und der Biegetensor für die Taststiftdurchbiegung bei genauen KMG heutzutage ohnehin bestimmt wird, läßt sich das ortsabhängige Biegeverhalten des KMG's sehr einfach ermitteln, indem der Biegetensor durch Antasten eines Prüfkörpers an verschiedenen Stellen im Meßbereich der Maschine bestimmt wird. Es hat sich nun als sehr zweckmäßig erwiesen, zur Bestimmung dieses Biegetensors einen Prüfkörper beispielsweise in Form einer Würfelecke zu verwenden, der an verschiedenen Stellen im Meßbereich des KMG angetastet wird, wobei dann die vom Taster auf den Prüfkörper ausgeübte Meßkraft nach Betrag und Richtung variiert wird. Auf diese Weise lassen sich die Elemente des Biegetensors sehr viel besser und genauer bestimmen als bei Antastung einer Kalibrierkugel.

Vom besonderen Vorteil ist es, wenn das neue Korrekturverfahren zusammen mit den bereits bekannten Korrekturverfahren zur Korrektur der statischen Führungsabweichungen der Meßschlitten nach dem "starren Modell" eingesetzt wird. Der andernfalls in die Qualität der Führungen zu investierende Aufwand beim Bau von KMG läßt sich dann nämlich weiter verringern.

Höchste Genauigkeiten lassen sich erzielen, wenn darüberhinaus auch die dynamischen Fehler des KMG kompensiert werden, also die Fehler, die aufgrund von permanenten Schwingungen einzelner Maschinenteile auftreten und dafür sorgen, daß die Position des z.B. an einem langen schlanken Meßarm angesetzten Tastkopfes zum Antastzeitpunkt nicht genau definiert ist. Diese Positionsabweichungen lassen sich mit Hilfe von Sensoren zweckmäßig in einem Zeitintervall beginnend vor dem Zeitpunkt der Antastung und Meßwerterfassung ermitteln und aus den Signalen dieser Sensoren lassen sich Dynamik-Korrekturwerte berechnen, die zur weiteren Genauigkeitssteigerung des KMG beitragen, wie das in der nach nach veröffentlichten P 43 42 312.4 der Anmelderin vom 11.12.1993 mit dem Titel "Verfahren zur Korrektur von schwingungsbedingten Meßfehlern bei Koordinatenmeßgeräten" und der eingangs genannten US-PS 4 333 238 beschrieben ist. Die Kombination des neuen Korrekturverfahrens für die elastischen Abweichungen mit dem Verfahren zur Korrektur der dynamischen Abweichungen ist ganz besonders von Vorteil bei Ständermeßgeräten, die mit einem sogenannten schaltenden Tastkopf ausgerüstet sind. Denn bei diesem Maschinentyp treten in besonderem Maße elastische Deformationen abhängig von der Stellung der Meßschlitten auf, zusätzlich ist wegen des nur kurzzeitigen Kontakts des schaltenden Tasters mit dem Werkstück die durch Maschinenschwingungen bedingte Positionsunsicherheit zum Antastzeitpunkt besonders hoch.

Mit der Kombination der genannten drei Korrekturverfahren, d.h. des neuen Verfahrens zur Korrektur der Maschinenbiegungen, der bekannten statischen Führungsfehlerkorrektur nach dem "starren Modell" und der ebenfalls bekannten Korrektur dynamischer Fehler lassen sich sehr geringe, bisher nicht erreichte Meßunsicherheiten für KMG erzielen.

Weitere Vorteile der Erfindung ergeben sich aus der nachfolgenden Beschreibung von Ausführungsbeispielen anhand der Figuren der beigefügten Zeichnungen.

Fig. 1 skizziert den prinzipiellen Aufbau eines KMG vom Ständertyp;

Fig. 2 ist eine vereinfachte Darstellung der kinematischen Kette des KMG's nach Figur 1;

Fig. 3 ist eine Prinzipskizze, die das aufgrund der Stellung der Pinole (4) verzerrte Koordinatensystem des KMG aus Figur 1 veranschaulicht;

Fig. 4 zeigt die Pinole (4) des KMG aus Figur 1 in vergrößertem Maßstabe;

Fig. 5-8 sind Prinzipskizzen, die mögliche elastische Deformationen eines Balkens veranschaulichen;

Fig. 9 veranschaulicht die am Ständer (2) des KMG nach Figur 1 angreifenden Kräfte und Momente;

Fig. 10 skizziert den prinzipiellen Aufbau eines KMG vom Portaltyp;

Fig. 11a und b zeigen Prüfkörper nach Art eines Kugeltripels (Fig. 11a) und Walzentripels (Fig. 11b);

Fig. 12 ist ein Diagramm, in dem die Änderung des am Prüfkörper nach Figur 11b gemessenen Koordinatenmeßwertes als Funktion der Antastkräfte in den drei Koordinatenrichtungen (x,y,z) dargestellt ist;

Fig. 13a und b    sind Diagramme, in denen die Streuung der aus mehreren Meßwerten bestimmten Elemente des Biegetensors $\mathbf{N}_T$ dargestellt sind;

Fig. 14    ist ein Diagramm, in dem die Steifigkeit der X- und Y-Achse des KMG nach Figur 10 abhängig von der Z-Position der Pinole (24) dargestellt ist;

Fig. 15 und 16    sind Diagramme, in denen die an einem Stufen- endmaß ermittelten Längenmeßunsicherheiten des KMG nach Figur 10 für verschiedene Meßwerte mit und ohne Korrektur der elastischen Fehler gegenübergestellt sind.

Bevor nun im Detail auf die Korrektur von elastischen Meßabweichungen eines KMG eingegangen wird, sollen die elastischen Abweichungen definiert werden um sie von den Führungsfehlern, die bereits bekanntermaßen nach dem sogenannten "starren Modell" entsprechend dem in der Einleitung genannten Stand der Technik korrigiert werden, zu unterscheiden. Die bekannten Führungsfehler des "starren Modells" sind eine Funktion der Position des Tastkopfs bzw. des betreffenden Meßschlittens in der betreffenden Bewegungsachse. Entsprechend werden beispielsweise translatorische und rotatorische Fehler durch Angabe der Art des Fehlers und der beiden Achsen, der Bewegungsachse und der Fehlerachse, bezeichnet. Beispielsweise wird üblicherweise eine seitliche Verlagerung (Translation) in Y-Richtung bei Verschiebung des "X"-Meßschlittens entlang der Meßachse X als xTy und eine Rotation wie beipielsweise eine Nickbewegung um die Y-Achse bei Verlagerung in X-Richtung als xRy geschrieben, wobei es korrekterweise in beiden Fällen heißen müßte xTy(x) und xRy(x), damit die Schreibweise mathematisch eindeutig die Abhängigkeit von der Translationskoordinate wiedergibt. Der erste Buchstabe spezifiziert also das korrigierte Glied der kinematischen Kette, d.h. die jeweilige Führungsrichtung, der zweite unterscheidet zwischen rotatorischen und translatorischen Fehlerkomponenten und der dritte gibt die Verschieberichtung bzw. die Rotationsachse an.

Elastisch bedingte Meßabweichungen von KMG sind hingegen die Folge von Deformationen einzelner Komponenten eines Gliedes der kinematischen Kette, wobei diese Deformationen **nicht** alleine Funktion der Position in der betreffenden Bewegungsachse selbst sind. Sie hängen vielmehr von weiteren Variablen ab, so z.B. von der Antastkraft F, der Beschleunigung a und der Stellung anderer Meßschlitten senkrecht zur eigentlichen zu korrigierenden Führungsrichtung. Entsprechend läßt sich beispielsweise für die Rollbewegung des in X-Richtung geführten Meßschlitten um seine eigene Achse nach dem elastischen Modell schreiben

$$xRx(x,z,y,F,a) = \ldots,$$

wodurch die funktionale Abhängigkeit dieser Fehlerkomponente von zusätzlichen Einflüssen wie der Antastkraft F, der Beschleunigung a und der momentanen Stellung der Meßschlitten in Z- und Y-Richtung angegeben ist.

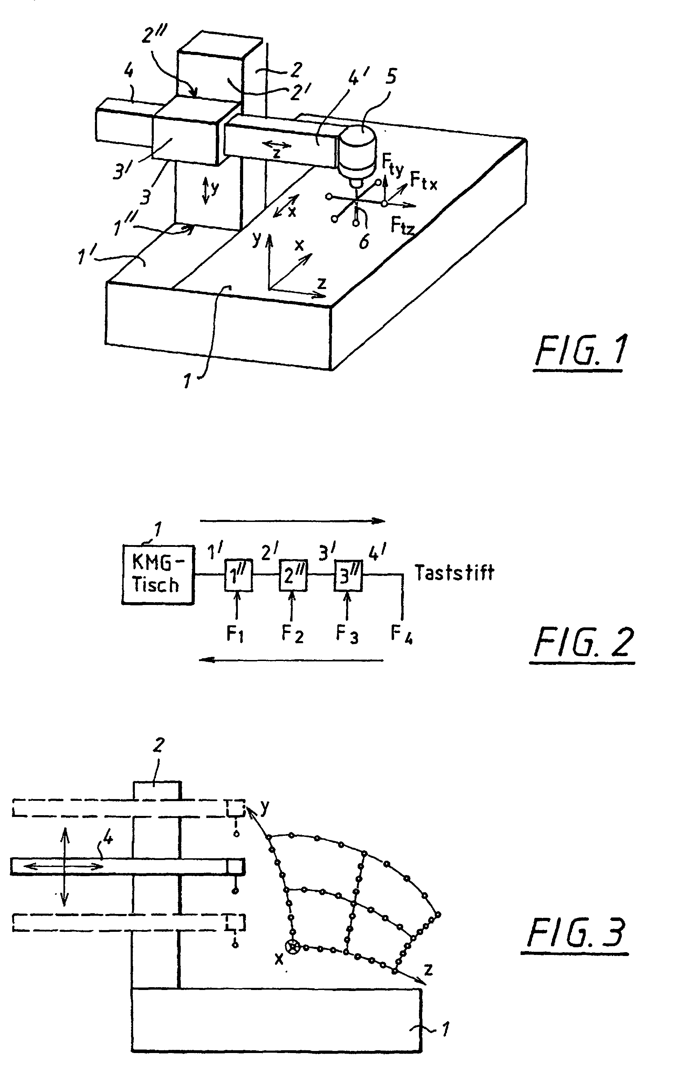

Im Folgenden werden unter Bezugnahme auf die Figuren 1 - 9 die theoretischen Grundlagen beschrieben, auf deren Basis die Korrektur von elastisch bedingten Geometrieabweichungen von Koordinatenmeßgeräten erfolgen kann. Zur Verdeutlichung des Sachverhaltes orientiert sich die Beschreibung an einem KMG in Ständerbauweise. Darüberhinaus werden jedoch zusätzliche Ansätze für elastische Abweichungen beschrieben, die zwar bei einem KMG vom Ständertyp nicht auftreten, aber bei anderen KMG Bauformen durchaus Bedeutung haben können.

Figur 1 skizziert den prinzipiellen Aufbau eines KMG vom Ständertyp. Es besteht aus einem Maschinentisch (1) mit der Führung (1') für den in x-Richtung verschiebbaren Ständer (2), an dem seinerseits in y-Richtung an der Führung (2') der vertikal verschiebbare Kreuzschieber (3) gelagert ist. In den Lagern (3') des Kreuzschiebers (3) gleitet die Pinole (4) mit ihren Führungen (4') in Richtung des Pfeils z.Sie trägt am vorderen Ende den Tastkopf (5) mit dem darin nachgiebig gehaltenen Taststift (6). Die Lagerspalte zwischen den vier Bestandteilen der kinematischen Kette, nämlich Tisch (1), Ständer (2), Querschieber (3) und Pinole (4) sind mit den Bezugszeichen (1", 2" und 3") bezeichnet.

Will man die Verformung jeden Gliedes dieser kinematischen Kette allgemein ansetzen so kann man schreiben:

$$\begin{bmatrix} \mathbf{T_i} \\ \mathbf{R_i} \end{bmatrix} = \mathbf{A_i} \cdot \begin{bmatrix} \mathbf{F_i} \\ \mathbf{M_i} \end{bmatrix} \qquad (1)$$

Mit:

$$\underline{T}_i = \begin{bmatrix} T_x \\ T_y \\ T_z \end{bmatrix} \equiv \text{Vektor der translatorischen Abweichungen} \quad (2)$$

$$\underline{R}_i = \begin{bmatrix} R_x \\ R_y \\ R_z \end{bmatrix} \equiv \text{Vektor der rotatorischen Abweichungen} \quad (3)$$

$$\underline{F}_i = \begin{bmatrix} F_x \\ F_y \\ F_z \end{bmatrix} \equiv \text{Vektor der eingeleiteten Kräfte} \quad (4)$$

$$\underline{M}_i = \begin{bmatrix} M_x \\ M_y \\ M_z \end{bmatrix} \equiv \text{Vektor der eingeleiteten Momente} \quad (5)$$

$$\underline{A}_i = \begin{bmatrix} \frac{\delta tx}{\delta F_x} & \frac{\delta tx}{\delta F_y} & \frac{\delta tx}{\delta F_z} & \frac{\delta tx}{\delta M_x} & \frac{\delta tx}{\delta M_y} & \frac{\delta tx}{\delta M_z} \\ \frac{\delta ty}{\delta F_x} & \frac{\delta ty}{\delta F_y} & \frac{\delta ty}{\delta F_z} & \frac{\delta ty}{\delta M_x} & \frac{\delta ty}{\delta M_y} & \frac{\delta ty}{\delta M_z} \\ \frac{\delta tz}{\delta F_x} & \frac{\delta tz}{\delta F_y} & \frac{\delta tz}{\delta F_z} & \frac{\delta tz}{\delta M_x} & \frac{\delta tz}{\delta M_y} & \frac{\delta tz}{\delta M_z} \\ \frac{\delta rx}{\delta F_x} & \frac{\delta rx}{\delta F_y} & \frac{\delta rx}{\delta F_z} & \frac{\delta rx}{\delta M_x} & \frac{\delta rx}{\delta M_y} & \frac{\delta rx}{\delta M_z} \\ \frac{\delta ry}{\delta F_x} & \frac{\delta ry}{\delta F_y} & \frac{\delta ry}{\delta F_z} & \frac{\delta ry}{\delta M_x} & \frac{\delta ry}{\delta M_y} & \frac{\delta ry}{\delta M_z} \\ \frac{\delta rz}{\delta F_x} & \frac{\delta rz}{\delta F_y} & \frac{\delta rz}{\delta F_z} & \frac{\delta rz}{\delta M_x} & \frac{\delta rz}{\delta M_y} & \frac{\delta rz}{\delta M_z} \end{bmatrix} \equiv \begin{array}{l} \text{Deformationsmatrix für} \\ \text{das i-te Glied der} \\ \text{kinematischen Kette} \\ \hfill (6) \end{array}$$

Der Einleitungsort für die Kräfte und Momente, die auf die einzelnen Bestandteile des KMG wirken, wird jeweils dort angenommen, wo zwei aufeinanderfolgende Glieder der kinematischen Kette miteinander verbunden sind, d.h. in den Lagerspalten (1", 2" und 3"). Denn da definitionsgemäß "elastische" Fehler in einem bestimmten Glied der kinematischen Kette des KMG stets durch Lasten verursacht werden, die in einem höheren oder niederen Glied der Kette auftreten, ist diese Darstellung allgemeingültig und vollständig. Als Beispiel sei die Pinole (4) angeführt. In Folge der Nachgiebigkeit verformt sie sich unter ihrem Eigengewicht. Dies ist aber keine "elastische" Abweichung im Sinne der genannten Definition, da diese Verformung lediglich von der Auskragung der Pinole (4) in z-Richtung abhängt. Allerdings überträgt sich die gleiche Gewichtsverlagerung in Form eines von der Stellung der Pinole (4) abhängigen Momentes auch auf den Ständer (2). Da sowohl das Drehmoment als auch der Angriffspunkt am Ständer unabhängig voneinander variieren können, entsteht in der vertikalen Bewegungsachse, der y-Achse, ein "elastischer" Fehler, der das Koordinatensystem des KMG verzerrt wie das in Figur 3 dargestellt ist. Anhand der Figur 3 wird deutlich, daß die Krümmung der Bewegungsachsen in Richtung der Koordinaten y und z von der Position der Pinole (4) in z-Richtung abhängt.

Wie man anhand von Gleichung (1) erkennt, besteht das Ergebnis dieser allgemeinen Beschreibung aus den Vektoren der translatorischen und rotatorischen Abweichungen $\underline{T}_i$ und $\underline{R}_i$. Dadurch wird es möglich, die elastisch bedingten Fehler in einer Form zu beschreiben, die zu bereits bestehenden Korrekturverfahren für die Führungsfehler nach dem Starren Modell (Vergleiche den in der Beschreibungseinleitung genannten Stand der Technik) kompatibel ist, nämlich durch sechs Fehlerfreiheitsgrade für jede Bewegungsachse. Figur 2 verdeutlicht diese Vorgehensweise. Die strukturellen Deformationen innerhalb der Verbindungselemente der kinematischen Kette zwischen Maschinentisch (1) und Taststift (6) werden in die Entstehungsorte der "klassischen", d.h. nach dem "Starren Modell" berücksichtigten Komponentenfehler, nämlich in die Lagerspalte (1",2",3") der Bewegungsachsen transformiert.

Durch diese Methode beschränkt sich die Erstellung der Korrekturalgorithmen für die elastischen Abweichungen eines KMG auf die Analyse der funktionalen Zusammenhänge, die durch die Differenzialquotienten der Deformationsmatrix $\underline{A}_i$ nach Gleichung (6) repräsentiert werden.

Die quantitative Bestimmung der Elemente der Deformationsmatrix $\underline{A}_i$ kann prinzipiell auf unterschiedliche Weise durchgeführt werden: z.B.

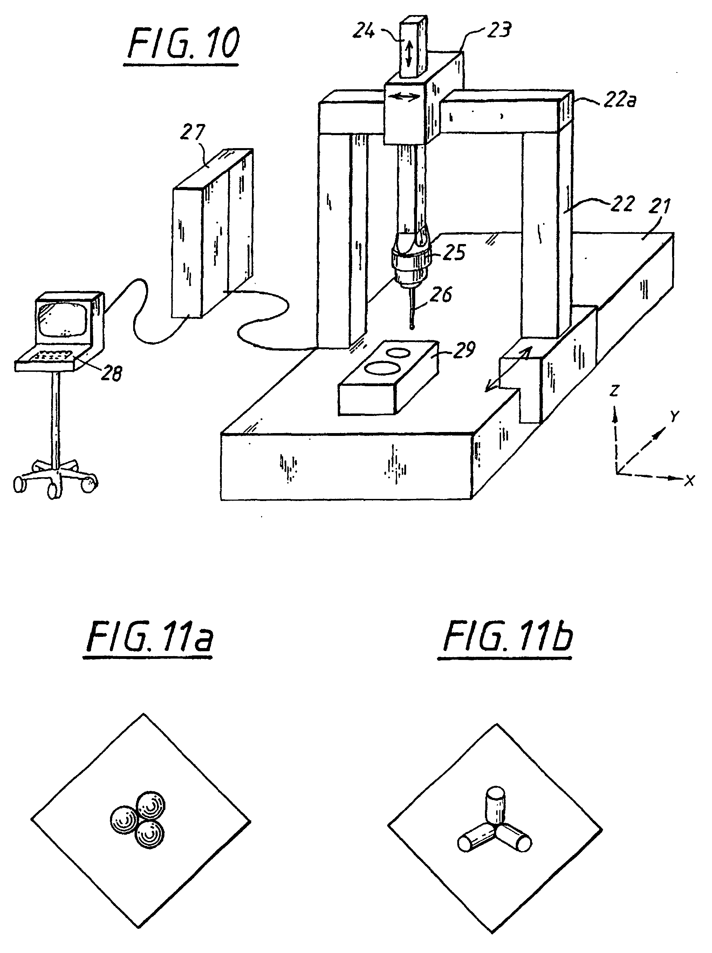

a) durch analytische numerische Verfahren aus den Konstruktionsdaten der jeweiligen Bauelemente des KMG,
b) rein meßtechnisch, indem das Biegungsverhalten der Maschine gemessen und durch Polynomansätze approximiert wird. Dieses Verfahren wird später noch anhand der Figuren 10 - 16 für den Fall eines KMG vom Portaltyp beschrieben,
c) durch analytische Ansätze, die das physikalische Verhalten der Bauteile des KMG berücksichtigen. Aufgrund dieser Ansätze können mit relativ geringem meßtechnischen Aufwand die Koeffizienten der Deformationsmatrix $\underline{A}_i$ mit den zuvor aufgestellten Ansatzfunktionen berechnet werden. Nach dieser Methode geht man wie folgt vor:

Erstellen der Deformationsmatrixen

Hierbei wird in mehreren Schritten vorgegangen:

1. Wird für das entsprechende Bauelement, beispielsweise für die Pinole (4), die in ganz allgemeiner Form geschriebene Deformationsmatrix $\underline{A}_i$ nach Gleichung (6) erstellt, indem die Zusammenhänge zwischen Belastung und translatorischer bzw. rotatorischer Deformation des Bauelements erarbeitet werden. Hierbei gilt, daß dann, wenn unter der angenommenen Belastung eine der Deformationen <u>nicht</u> erfolgt, das entsprechende Element der Matrix $\underline{A}_i$ zu null gesetzt wird.

2. Sind dann geeignete Meßverfahren auszuarbeiten, um die Koeffizienten der Matrix $\underline{A}_i$ z.B. durch Polynompproximation der Meßergebnisse quantitativ zu bestimmen.

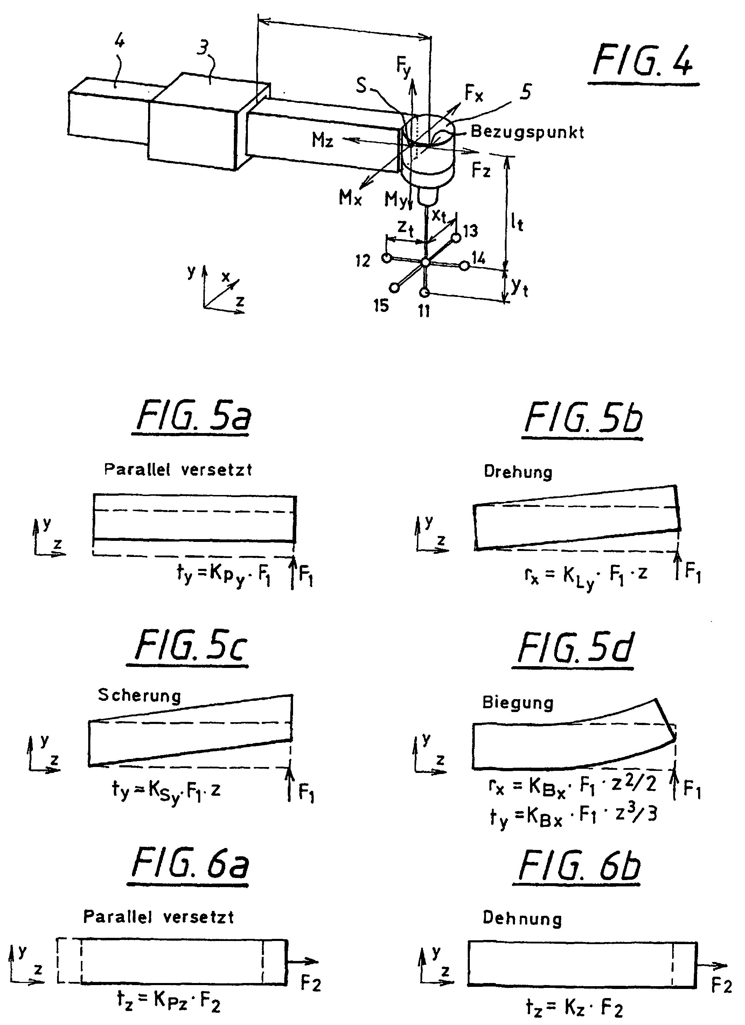

Beispielsweise läßt sich für einen einseitig elastisch gelagerten Biegebalken, wie ihn die Pinole (4) des KMG nach Figur 1 darstellt, ein Deformationskatalog erstellen, mit dessen Hilfe eine einfache Zuweisung für die Terme der mechanischen Deformation erfolgen kann. In diesem Katalog, dessen Bestandteile in den Figuren 5 - 8 skizziert sind, sind die vier Hauptbelastungsarten eines Biegebalkens berücksichtigt nämlich:

a) Krafteinleitung senkrecht zur Balkenachse
b) Krafteinleitung parallel zur Balkenachse
c) Momenteneinleitung senkrecht zur Balkenachse
d) Momenteneinleitung parallel zur Balkenachse.

Es ergeben sich folgende Terme:

a) bei Krafteinleitung senkrecht zur Balkenachse:

- Parallelversatz

$$t_y = K_{py} \cdot F_1 \qquad \text{(Fig. 5a)}$$

- Drehung

$$r_x = K_{Ly} \cdot F_1 \cdot z \qquad \text{(Fig. 5b)}$$

- Scherung

$$t_y = K_{Sy} \cdot F_1 \cdot z \qquad \text{(Fig. 5c)}$$

- Biegung

$$r_x = K_{Sx} \cdot F_1 \cdot z^2/2$$

und

$$t_y = K_{Sx} \cdot F_1 \cdot z^3/3 \qquad \text{(Fig. 5d)}$$

b) bei Krafteinleitung parallel zur Balkenachse:

- Parallelversatz

$$t_z = Kp_z \cdot F_2 \qquad \text{(Fig. 6a)}$$

- Dehnung

$$t_z = K_z \cdot F_2 \qquad \text{(Fig. 6b)}$$

c) bei Momenteneinleitung senkrecht zur Balkenachse:

- Drehung

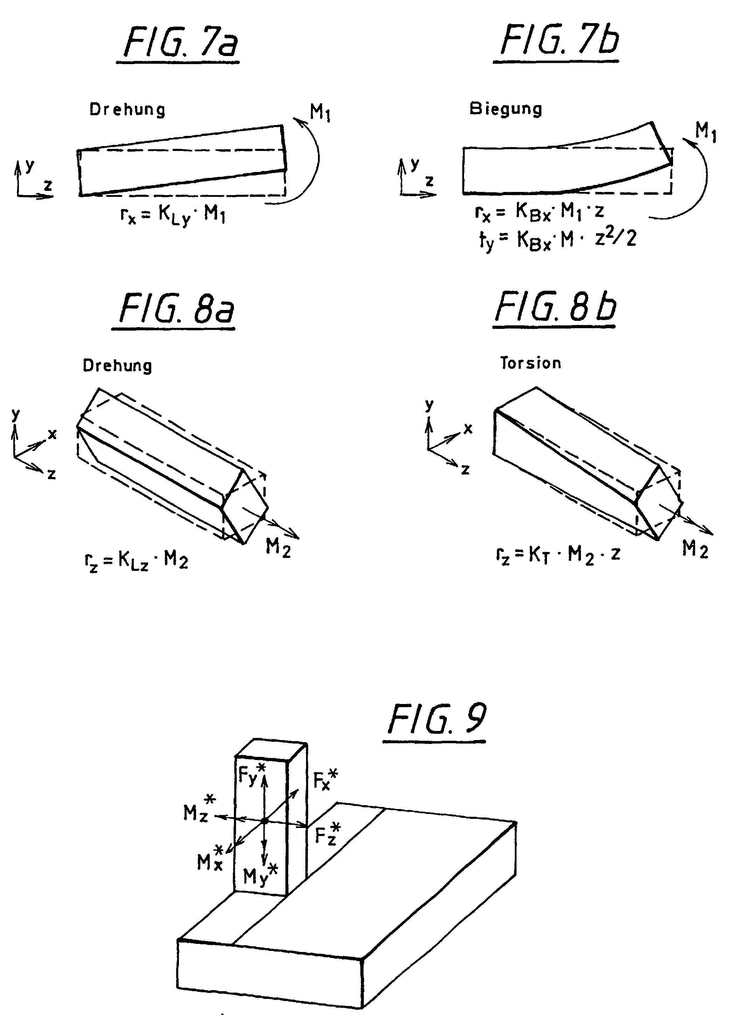

$$r_x = K_{LY} \cdot M_1 \qquad \text{(Fig. 7a)}$$

- Biegung

$$r_x = K_{Sx} \cdot M_1 \cdot z$$

und

$$t_y = K_{SX} \cdot M_1 \cdot Z^2/2 \qquad \text{(Fig. 7b)}$$

d) für das achsiale Moment:

- Drehung

$$r_z = K_{LZ} \cdot M_2 \qquad \text{(Fig. 8a)}$$

- Torsion

$$r_Z = K_T \cdot M_2 \cdot z \qquad \text{(Fig. 8b)}$$

In den mechanischen Termen ist mit r jeweils eine Rotation und mit t eine Translation um bzw. entlang der mit dem Index bezeichneten Achse gemeint. Mit K sind die für die jeweilige Verformung maßgeblichen Koeffizienten bezeichnet, F sind die eingeleiteten Kräfte und M die eingeleiteten Momente. Die Herleitung der einzelnen Terme für den Biegebalken ergibt sich aus den Formeln der klassischen Mechanik, wie sie in Standardwerken für den Maschinenbauer, z.B. in Dubbels Handbuch für den Maschinenbauer, in Band I, Abschnitt "Festigkeitslehre", Kap. III "Biegung" beschrieben sind.

Deformationsmatrix für Pinolen

Figur 4 zeigt die geometrischen Verhältnisse, die an einer Pinole eines KMG in Ständerbauweise vorzufinden sind.

Die Erstellung der allgemeinen Deformationsmatrix für Pinolen berücksichtigt neben der Pinolenposition auch Antastkräfte, Antastrichtungen, variierende Taststiftlängen und -richtungen.

Die Antastkräfte werden jeweils in einen Bezugspunkt verschoben. Dieser Punkt ist der Schnittpunkt der neutralen Faser, d.h. der Symmetrieachse der Pinole und der Mittelachse des Tastkopfes. Die Belastung des Balkens greift im Bezugspunkt an und besteht aus der Antastkraft und einem Moment, das sich durch die Verschiebung der Antastkraft in den Bezugspunkt ergibt.

Zur Beschreibung der Durchbiegung der Pinole infolge der Antastkräfte werden die translatorischen und rotatorischen Anteile für den Bezugspunkt berechnet, auf den sich auch alle "klassischen" Fehlerkomponenten beziehen.

Die Durchbiegung der Pinole infolge der Antastkräfte wird den entsprechenden translatorischen Anteilen zugeordnet.

Im folgenden sind zwei Beispiele angegeben, die sich anhand von Figur 4 nachvollziehen lassen.

1) Es greift eine Kraft an Taststift (14) in x-Richtung an. Durch diese Kraft wird die Pinole unter anderem in der Lagerung gedreht. Um die Tastkugelauslenkung, die sich durch die Drehung ergibt, berechnen zu können, ist der Drehwinkel mit der Strecke $z+z_t$ zu multiplizieren. In diesem Fall ist eine Zuordnung zu einem translatorischen Fehler erforderlich. Würde die Drehung, was von der Systematik her möglich ist, als ZRY deklariert, könnte die Tastkugelauslenkung nicht exakt berechnet werden, da die rotatorischen Fehler der Pinole nur mit den Taststiftlängen multipliziert werden.

2) Es greift eine Kraft an Taststift (13) in Z-Richtung an. Dadurch wird die Pinole auch durch ein Moment belastet. Dieses Moment bewirkt unter anderem eine Biegung der Pinole. Dadurch verdreht sich der Tastkopf um einem bestimmten Winkel. Um die Auslenkung der Tastkugel infolge der Verdrehung berechnen zu können, muß der Winkel nur mit der Taststiftlänge multipliziert werden. Dieser Fehler kann somit als ZRY behandelt werden.

Die allgemeine Deformationsmatrix ergibt sich somit wie folgt:

$$\underline{A}_p = \begin{vmatrix} \dfrac{\delta tx}{\delta F_x} & 0 & 0 & 0 & \dfrac{\delta tx}{\delta M_y} & \dfrac{\delta tx}{\delta M_z} \\ 0 & \dfrac{\delta ty}{\delta F_y} & 0 & \dfrac{\delta ty}{\delta M_x} & 0 & 0 \\ 0 & 0 & \dfrac{\delta tz}{\delta F_z} & \dfrac{\delta tz}{\delta M_x} & 0 & 0 \\ 0 & \dfrac{\delta rx}{\delta F_y} & 0 & \dfrac{\delta rx}{\delta M_x} & 0 & 0 \\ \dfrac{\delta ry}{\delta F_x} & 0 & 0 & 0 & \dfrac{\delta ry}{\delta M_y} & 0 \\ 0 & 0 & 0 & 0 & 0 & \dfrac{\delta rz}{\delta M_z} \end{vmatrix} \qquad (7)$$

Die Elemente dieser Matrix müssen nun anhand des Deformationskatalogs für Biegebalken nach Figur 5 - 8 mit den entsprechenden Termen gefüllt werden. Die Terme für die Differentialquotienten lauten im einzelnen:

$$\frac{\delta tx}{\delta F_x} = F_x \cdot \left[ K_{By} \cdot \left( \frac{z^n}{3} + \frac{4}{15} \cdot h^2 \cdot z \right) + K_{Lx} \cdot z \cdot (z + z_t) + K_{Px} \right]$$

$$\frac{\delta ty}{\delta F_y} = F_y \cdot \left[ K_{Bx} \cdot \left( \frac{z^n}{3} + \frac{4}{15} \times h^2 \cdot z \right) + K_{Ly} \cdot z \cdot (z + z_t) + K_{Py} \right]$$

$$\frac{\delta tz}{\delta F_z} = F_z \cdot [K_{Pz} + K_z]$$

$$\frac{\delta rx}{\delta F_y} = F_y \cdot K_{Bx} \cdot \frac{z^2}{2}$$

$$\frac{\delta ry}{\delta F_x} = F_x \cdot K_{By} \cdot \frac{z^2}{2}$$

$$\frac{\delta tx}{\delta M_y} = F_x \cdot z_t \cdot \left[ K_{By} \cdot \frac{z^2}{2} + K_{Lx} \cdot (z + z_t) \right]$$

$$\frac{\delta tx}{\delta M_z} = F_x \cdot (1_t - y_t)^2 \cdot (K_{Lx} + K_T \cdot z)$$

$$\frac{\delta ty}{\delta M_x} = F_y \cdot z_t \cdot \left[ K_{Bx} \cdot \frac{z^2}{2} + K_T \cdot (z + z_t) \right]$$

$$\frac{\delta tz}{\delta M_x} = F_z \cdot (1_t - y_t) \cdot \left[ K_{Bx} \cdot \left[ \left( \frac{z^2}{2} + z \cdot (1_t - y_t) \right) \right] + K_{Ly} \cdot (1t - 1_y) \right]$$

$$\frac{\delta rx}{\delta M_x} = F_y \cdot z_t^2 \cdot K_{Bx} \cdot z$$

$$\frac{\delta ry}{\delta M_y} \, F_x \cdot z_t^2 \cdot K_{By} \cdot z$$

$$\frac{\delta rz}{\delta Mz} = F_z \cdot x_t^2 \, (K_T \cdot z + K_{Lz})$$

Die Berechnung der einzelnen Elemente erfolgt stets mit positivem Vorzeichen (alle Konstanten sind Beträge). Da bei der Antastung eine Meßverfälschung stets in Antastrichtung stattfindet, müssen die Korrekturwerte ein der Antastrichtung entgegengesetztes Vorzeichen erhalten.

Deformationsmatrix für Ständer

Bei der Lastannahme des Ständers wurde genauso verfahren wie bei der Pinole. Die Kräfte und Momente, die an der Pinole (4) angreifen (also auch die Eigengewichtskraft der Pinole), werden in einen Bezugspunkt transformiert. Dieser liegt beim Ständer (2) in der Mitte des Kreuzschiebers (3). Die Belastung des Ständers (2) nach der Transformation ist in Figur 9 zu sehen.

Diese Kräfte und Momente ergeben sich als Summe der auf die Pinole wirkenden Belastungen (Antastkräfte) und durch die Eigengewichtsverlagerung der Pinole. Es wurde zur Unterscheidung der Belastungen des Ständer von der Pinole der hochgestellte Stern (*) eingeführt.

Da die Struktur des Ständers und die Anlenkung des Kreuzschiebers am Ständer relativ kompliziert sind, kommt es zu einer geringfügigen Torsion des Ständers, die von der Position der Pinole (Z-Position) und der Position des Kreuzschiebers (Y-Position) abhängt. Es handelt sich also um ein von Z abhängiges Rollen der Y-Achse. Aus diesem Grunde wurde das Matrixelement $\delta ry/\delta M_x^*$ vorgesehen. Dieses Torsionsverhalten läßt sich physikalisch nur schwer modellieren und muß deshalb durch eine aus entsprechenden Messungen empirisch abzuleitenden Funktion approximiert werden.

Somit lautet die allgemeine Deformationsmatrix des Ständers:

$$
\underline{A}_{St}=\begin{vmatrix} \frac{\delta tx}{\delta F_x^*} & 0 & 0 & 0 & 0 & \frac{\delta tx}{\delta M_z^*} \\ 0 & \frac{\delta ty}{\delta F_y^*} & 0 & 0 & 0 & 0 \\ 0 & 0 & \frac{\delta tz}{\delta F_z^*} & \frac{\delta tz}{\delta M^*} & 0 & 0 \\ 0 & 0 & \frac{\delta rx}{\delta F_z^*} & \frac{\delta rx}{\delta M_x^*} & 0 & 0 \\ 0 & 0 & 0 & \frac{\delta ry}{\delta M_x^*} & \frac{\delta ry}{\delta M_y^*} & 0 \\ \frac{\delta rz}{\delta F_x^*} & 0 & 0 & 0 & 0 & \frac{\delta rz}{\delta M_z^*} \end{vmatrix} \qquad (8)
$$

Die Terme für den Ständer lauten:

$$
\frac{\delta tx}{\delta F_x^*} = F_x^* \cdot (K_{Bz}^* \cdot \frac{y^n}{3} + \frac{4}{15} \cdot K_{Bz}^* \cdot h_{St}^2 \cdot y)
$$

$$
\frac{\delta tx}{\delta F_z^*} = M_z^* \cdot K_{Bz}^* \cdot \frac{y^2}{2}
$$

$$
\frac{\delta ty}{\delta F_y^*} = F_Y^* \cdot K_Y^*
$$

$$
\frac{\delta tz}{\delta F_z^*} = F_z^* \cdot (K_{Bx}^* \cdot \frac{y^n}{3} + \frac{4}{15} \cdot K_{Bx}^* \cdot h_{St}^2 \cdot y)
$$

$$
\frac{\delta tz}{\delta M_z^*} = M_x^* \cdot K_{Bx}^* \cdot \frac{y^2}{2}
$$

$$
\frac{\delta rx}{\delta F_z^*} = F_z^* \cdot K_{Bx}^* \cdot \frac{y^2}{2}
$$

$$
\frac{\delta rx}{\delta M_x^*} = M_x^* \cdot K_{Bx}^* \cdot y
$$

$$\frac{\delta ry}{\delta M^*_y} = M^*_y \cdot K^*_{Ty} \cdot y$$

$$\frac{\delta rz}{\delta F^*_x} = F^*_x \cdot K^*_{Bz} \cdot \frac{y^2}{2}$$

$$\frac{\delta rz}{\delta M^*_z} = M^*_z \cdot K^*_{Bz} \cdot y$$

Die Nomenklatur der Matrixelemente ist so angelegt, daß jeweils durch Austauschen des "δ" im Zähler gegen ein "Y" die Bezeichnung für die "klassische" Fehlerkomponente entsteht, welcher der elastische Einfluß überlagert ist.

Deformationsmatrix des Tisches

Bei der Aufführung der einzelnen Therme sind die Effekte der Lagernachgiebigkeit des Ständers noch nicht erfaßt worden. Der Grund dafür ist, daß diese "elastischen" Fehler auf einfache Weise den rotatorischen und translatorischen Fehlern der X-Führungsbahn zugeordnet werden können. Diese Zuordnung ist sinnvoll, da sich die Nachgiebigkeit der Lager des Ständers auf alle nachfolgenden Glieder der kinematischen Kette auswirkt, geradeso wie es die rotatorischen Fehler der X-Achse tun.
Die allgemeine Deformationsmatrix des Tisches ergibt sich wie folgt:

$$\underline{A}_{LSt} = \begin{vmatrix} \frac{\delta tx}{\delta F^*_x} & 0 & 0 & 0 & 0 & 0 \\ 0 & \frac{\delta ty}{\delta F^*_y} & 0 & 0 & 0 & 0 \\ 0 & 0 & \frac{\delta tz}{\delta F^*_z} & \frac{\delta tz}{\delta M^*_x} & 0 & 0 \\ 0 & 0 & 0 & \frac{\delta rx}{\delta M^*_x} & 0 & 0 \\ 0 & 0 & 0 & 0 & \frac{\delta ry}{\delta M^*_y} & 0 \\ 0 & 0 & 0 & 0 & 0 & \frac{\delta rz}{\delta M^*_z} \end{vmatrix} \qquad (9)$$

Die einzelnen Terme für diese Fehler ergeben sich aus den Konstanten für die jeweilige Lagernachgiebigkeit und lauten:

$$\frac{\delta tx}{\delta F^*_x} = F^*_x \cdot K^*_{Px}$$

$$\frac{\delta ty}{\delta F^*_y} = F^*_y \cdot K^*_{Py}$$

$$\frac{\delta tz}{\delta F^*_z} = F^*_z \cdot K^*_{Pz}$$

$$\frac{\delta rx}{\delta M^*_x} = M^*_x \cdot K^*_{Lx}$$

$$\frac{\delta ry}{\delta M_y^*} = M_y^* \cdot K_{Ly}^*$$

$$\frac{\delta rz}{\delta M_z^*} = M_z^* \cdot K_{Lz}^*$$

Auch die Vorzeichen der Fehler des Tisches ergeben sich so, wie es für die 18(+3) Fehler des "starren" Modells festgelegt wurde.

Mit dem bis hierher beschriebenen Ansatz lassen sich die elastischen Effekte des Tisches, des Ständers und der Pinole, die einen signifikanten Einfluß auf die Meßunsicherheit haben, gut korrigieren.

Ansatz zur Korrektur von elastisch bedingtem Rollen

Ist die Geräteführung der ersten Achse (meistens die X-Achse) besonders biegeweich, kann die beim Ausfahren der Pinole verursachte Rotation um die X-Achse zusätzlich noch von der X-Position abhängig sein. Dieser Fehler tritt z.B. bei großen Ständergeräten mit gegossenem Fundament-Bett und vor allem bei Brückengeräten auf. Geht man davon aus, daß dieses elastisch bedingte Rollen in der X-Führung durch ein von der Z-Position abhängiges Moment verursacht wird und die X-Führung einen Nachgiebigkeitsverlauf N'(x) aufweist, so ergibt sich mit A ≡ Gewichtskraft der Pinole:

$$\frac{\delta rx}{\delta M_x^*} = M_x^* \cdot N_R^{'}(x) \tag{10}$$

$$M_x^*(Z) = A \cdot Z \tag{11}$$

$$XRX(X, Z) = N_R^{'}(X) \cdot A \cdot Z$$

$$XRX(X,Z) = N_{Rx}(X) \cdot Z \tag{12}$$

Um den Nachgiebigkeitskoeffizienten in Gleichung (12) bestimmen zu können, muß der Rollwinkelverlauf an zwei voneinander verschiedenen Z-Positionen gemessen werden. Anschließend wird mit der Differenz aus beiden Rollwinkelmessungen der Koeffizient $N_{RX}$ bestimmt.

Bei dieser Berechnung ist vorausgesetzt, daß der Drehpunkt dieser Rollbewegung fest ist. Ist dies nicht der Fall, muß noch eine von X und Z abhängige translatorische Verschiebung angesetzt werden. Es gilt:

$$\frac{\delta ty}{\delta M_x^*} = M_x^* \cdot N_{Ty}^{'}(x)$$

$$\frac{\delta tz}{\delta M_x^*} = M_x^* \cdot N_{Tz}^{'}(x)$$

$$XTY(X,Z) = N_{Ty}(X) \cdot Z \tag{13}$$

$$XTZ(X,Z) = N_{Tz}(X) \cdot Z \tag{14}$$

Mit Hilfe der Gleichungen 12, 13 und 14 ist es nunmehr möglich, auch einen Rollverlauf zu korrigieren, der entlang der X-Führung durch elastische Effekte von der Position der Pinole abhängt.

Erfassung der elastischen Deformationen und Bestimmung der Koeffizienten

Die in den vorstehenden Gleichungen enthaltenen Konstanten lassen sich dadurch bestimmen, daß die unterschiedlichen elastischen Deformationen des KMG in Abhängigkeit von den entsprechenden Achspositionen meßtechnisch erfaßt werden. Die Konstanten lassen sich anschließend rechnerisch durch Approximation aus den Meßergebnissen bestimmen. Beispielsweise können die Deformationen der Pinole (4) über Messungen an einer Präzisionskugel bestimmt werden wobei man dabei so vorgeht, daß man den Kugeldurchmesser einmal allein durch Antastung mit in X-Richtung auskragenden Taststift in Y-Richtung bestimmt. In ähnlicher Weise geht man vor und bestimmt den Kugeldurchmesser mit einem in Y-Richtung in einem in Z-Richtung auskragendem Taststift. Auf diese Weise lassen sich dann die durch die Antastkraft zwischen Werkstück und Tastkugel bedingten unterschiedlichen Nachgiebigkeiten separieren. Hierbei kann es zweckmäßig sein, die Taststifte zu verlängern, um die Wirkung der Hebelarme zu verstärken.

Die nachstehende Tabelle zeigt den Zusammenhang zwischen der Antastrichtung, dem Taststift, der zur Antastung ausgewählt wurde, und den daraus resultierenden elastischen Deformationen der Pinole (4) des KMG. Die oben beschriebenen Messungen an einem Kugelnormal reichen aus, um alle Koeffizienten, die in der Deformationsmatrix der Pinole nach Gleichung (7) enthalten sind, zu bestimmen. Dabei kann die Approximation der Meßwerte nach der Methode der kleinsten Fehlerquadrate erfolgen.

Tabelle

|  | Biegung um X | Biegung um Y | Torsion | Dehnung/ Stauchung |
|---|---|---|---|---|
| Taster 11 $F_Z, F_y$ | $F_X$ | $F_X$ | $F_Z$ |
| Taster 12 $F_Y, F_Z$ | $F_X$ | $F_X$ | $F_Z$ |
| Taster 13 $F_Y$ | $F_X, F_Z$ | $F_X, F_Y$ | $F_Z$ |
| Taster 14 $F_Y, F_Z$ | $F_X$ | $F_X$ | $F_Z$ |
| Taster 15 $F_Y$ | $F_X, F_Z$ | $F_X, F_Y$ | $F_Z$ |

Die Ständerbiegung kann am einfachsten über eine Messung des Neigungswinkels mit einem Neigungsinterferometer erfaßt werden. Hierbei muß durch einen geeigneten Meßaufbau sichergestellt werden, daß die Biegung des Ständers (2) und die Nachgiebigkeit der Lager getrennt voneinander erfaßt werden. Man kann so vorgehen, daß die Ständerbiegung in verschiedenen Z-Positionen entlang der Y-Achse gemessen wird, um die Ständerbiegung zu erfaßen. Dagegen genügt es, zur Ermittlung der Nachgiebigkeit der Lager die Neigung des Ständers einmal beim Verfahren in Z-Richtung zu messen, wenn der Kreuzschieber die unterste Position einnimmt. Diese Meßlinie ist ausreichend, da in der unteren Y-Position der Pinole der Einfluß der Ständerbiegung noch sehr gering ist.

In der Regel läßt sich aufgrund von Kenntnissen der wirksamen Kräfte und Momente auch schon ohne Messungen entscheiden, welche Parameter für eine Biegungskorrektur sinnvollerweise berücksichtigt werden sollten und welche nicht Beispielsweise kann davon ausgegangen werden, daß parallele Lagerverschiebungen vernachlässigbar sind und Dehnungen, Stauchungen und Scheerungen im allgemeinen ebenfalls nur einen sehr geringen Beitrag zur Maschinendeformation leisten. Für ein KMG vom Ständertyp wie vorstehend beschrieben sind folgende Effekte in der Regel korrekturwürdig:

Deformationen aufgrund der Antastkraft

Es hat sich erwiesen, daß eine Korrektur der elastischen Effekte bei Antastung in Richtung der X- und der Z-Achse sinnvoll ist. Hierbei tritt eine Deformation der Pinole auf und zwar als Biegung sowie als Torsion auf, was aufgrund der schlanken Bauweise dieses Meßschlittens auch erwartet werden kann. Des weiteren ist die Biegung des Ständers zu berücksichtigen, die auftritt, wenn der Kreuzschieber (3) bei mehr oder weniger stark ausgefahrener Pinole (4) in der Höhe d.h. in Y-Richtung verfahren wird.

Nachdem die einzelnen Nachgiebigkeitskoeffizienten für die vorstehend genannten wesentlichen elastischen Effekte bestimmt wurden, können sie als Korrekturwerte einem entsprechend aufbereiteten Programmodul zugeführt werden, das die Korrektur der elastisch bedingten Maschinenabweichungen durchführt. Hierbei ist es zweckmäßig, wenn dieses Modul zur Korrektur der elastischen Maschinenabweichungen grundsätzlich dem klassischen geometrischen Korrekturmodul vorgeschaltet wird, das die Führungsfehler nach dem an sich bekannten "starren Modell" der Führungsfehlerkorrektur behebt, damit sich das "elastisch" korrigierte KMG anschließend wie ein steifes (starres) KMG verhält. Die Berechnung der elastischen Abweichungen mit Hilfe der Deformationsmatrixen ist dann bei jedem Antastvorgang durchzuführen, wenn ein unbekanntes Werkstück vermessen wird, da sich die Nachgiebigkeit des Maschinenaufbaus mit jeder Achsbewegung des KMG ändert. Wenn man also die elastischen Abweichungen eines KMG vom Ständertyp wie vorstehend beschrieben korrigieren will und gleichzeitig eine Korrektur der "klassischen" Fehler entsprechend dem "starren Modell" vornehmen will wird zweckmäßig in folgender Reihenfolge vorgegangen:

1. Auslesen der Maßstäbe und Übergeben von Zusatzinformationen (Antastkraft, Taststiftlängen);
2. Berechnen der Deformationen der Pinole;
3. Berechnen der Abweichungen, die durch die Deformationen der Pinole bedingt sind;
4. Berechnen der Deformationen des Ständers;
5. Berechnen der Deformationen der X-Führungsbahn (Lagernachgiebigkeit);
6. Berechnung der Gesamtabweichungen, die durch elastische Effekte bedingt sind;
7. Ermittlung der Abweichungen, die durch die geometrischen Fehler des KMG nach dem "starren Modell" verursacht werden;
8. Geometrisch und elastisch bedingte Abweichungen aufsummieren.

Mit dem vorstehend beschriebenen Vorgehen lassen sich elastische Abweichungen des Ständers des KMG, die zuvor bei ca. 4,5μm gelegen haben, auf weniger als 1,5μm reduzieren. Gleichzeitig lassen sich Fehler in der Position des Tastkopfs an der Pinole aufgrund von Antastkräften, die bisher in der Größenordnung von bis zu 6μm gelegen haben, durch die beschriebene Korrekturmethode auf weniger als 2μm reduzieren, unter sonst gleichen Bedingungen. Mit dem vorstehend beschriebenen Fehlermodell wurde ein Ständermeßgerät der Anmelderin vom Typ USMC 120810 vollständig in Bezug auf die elastischen Abweichungen und gleichzeitig in Bezug auf die klassischen Führungsfehler nach dem "starren" Fehlermodell korrigiert. Im Ergebnis zeigten die danach durchgeführten Messungen, daß die systematischen elastischen Fehler im Meßvolumen von $(760 \text{ mm})^3$ bis zur Größenordnung der zufälligen Fehler reduziert werden konnten. Die systematischen elastischen Restfehler trugen mit 1,5μm zur Meßunsicherheit bei, was gegenüber der Antastunsicherheit von 3μm für systematische und zufällige Anteile vernachlässigbar ist. Eine weitere Reduzierung der Fehleranteile des KMG vom Ständertyp läßt sich mithin nur noch dadurch erreichen, daB auch die dynamischen Fehleranteile aufgrund von Schwingungen des Maschinenaufbaus erfaßt und korrigiert werden, beispielsweise durch Sensoren in der Nähe des Tastkopfs (6), deren Signale die momentane Beschleunigung und damit den Bewegungszustand des mit wenigen μm Amplitude oszillierenden Tastkopfs erfassen.

Im folgenden wird anhand der Figuren 10 - 16 erläutert, wie sich die wesentlichen elastischen Deformationen bei einem KMG vom Portal-Typ korrigieren lassen. Hierbei wird allerdings nicht der analytische Ansatz zur quantitativen Bestimmung der Elemente der Deformationsmatrix benutzt, der für das Ständermeßgerät anhand der Figuren 1 - 9 gewählt worden war, sondern ein rein meßtechnisches Verfahren, bei dem die Meßergebnisse durch Polynomansätze approximiert werden. Außerdem wird angenommen, daß elastische Deformationen des KMG im wesentlichen nur durch die Antastkraft verursacht werden. Schließlich lassen sich unter Berücksichtigung des prinzipiellen Aufbaus eines KMG vom Portaltyp noch zusätzliche Annahmen über die elastischen Verbiegungen treffen, die den größten Beitrag zu den Meßabweichungen liefern. In Figur 10 ist ein solches KMG vom Portaltyp skizziert. Es besteht aus dem Maschinentisch (21), dem waagerecht darauf in Y-Richtung verfahrbaren Portal (22), das den auf dem Portalbogen (22a) in X-Richtung geführten sogenannten Querschlitten (23) trägt und der im Querschlitten (23) vertikal in Z-Richtung geführten Pinole (24), an der der Tastkopf (25) mit dem Taststift (26) hängt.

Die Steuerung des KMG ist mit (27) und der Rechner mit (28) bezeichnet.

Bei der Antastung eines Werkstücks (29) treten in erster Linie folgende elastische Deformationen auf:

1. Die relativ schlanke und leicht gebaute Pinole (24) biegt sich abhängig von ihrer Ausfahrstellung in Z-Richtung entgegen der Antastrichtung durch. Diese ergibt zwei Fehleranteile xTx(z,F) und yTy(z,F).

2. Außerdem biegt sich der Querträger (22a) und verkippt um die Lagerung der Seitenführung im Portalfluß (22) . . Das Ausmaß dieser Bewegung hängt ab vom Hebelarm, d.h. von der Stellung des Querschlittens (23) in X-Richtung. Das ergibt einen Fehleranteil yty(x,F).

Gegenüber diesen Fehlern sind die anderen elastischen Abweichungen des Portalgerätes vernachlässigbar. Da bei der vorstehenden Betrachtung nur elastische Biegungen aufgrund der Meßkraft zwischen Taster (26) und Werkstück (29) berücksichtigt werden, läßt sich der Einfluß der Maschinenbiegung auf die gleiche Weise bestimmen und rechnerisch berücksichtigen wie die Durchbiegung des Taststifts (16). Diese wird üblicherweise ermittelt, indem für den jeweiligen Taststift ein Biegetensor bestimmt wird, der die Meßabweichung aufgrund der Tasterbiegung gemäß folgendem Zusammenhang beschreibt:

$\vec{s}' = s + N_T \cdot \vec{F}$. Hier ist s' die Auslenkung der Tastkugel beim Antastvorgang, s die Auslenkung, die von den Meßsystemen im Tastkopf (25) gemessen wird, $\mathbf{N}_T$ der Biegetensor und $\vec{F}$ die zwischen Tastkugel und Werkstück aufgebaute Meßkraft, $N_T$ läßt sich allgemein schreiben als

$$N_T = \begin{vmatrix} a_{11} & a_{21} & a_{31} \\ a_{12} & a_{22} & a_{32} \\ a_{13} & a_{23} & a_{33} \end{vmatrix} \qquad (15)$$

Die Elemente dieses Biegetensors werden für jeden Taststift üblicherweise durch Antastung einer Kalibrierkugel bestimmt. Da jedoch bei der Bestimmung dieses Biegetensors nicht nur die Durchbiegung des Taststiftes selbst, sondern auch die elastische Verbiegung der Pinole (24) und des Querträgers (22a) "mitgemessen" wird, können die vorstehend genannten drei Fehlereinflüsse ermittelt werden, indem der Biegetensor $N_T$ für einen beliebigen Taststift an verschiedenen Punkten im Meßvolumen der Maschine, d.h. primär bei Sverschiedenen Stellungen der Pinole (24) und des Querschlittens (23) bestimmt wird. Bei der anschließenden Auswertung muß dann lediglich noch der ortsunabhängige Anteil des Biegetensors, der die Taststiftbiegung beschreibt, separiert werden und dann lassen sich aus den ortsabhängigen Anteilen des Biegetensors die elastischen Maschinenfehler berechnen. Bei dieser Methode wird die Kalibrierung der Taststiftbiegung vom Ort der Kalibrierung unabhängig.

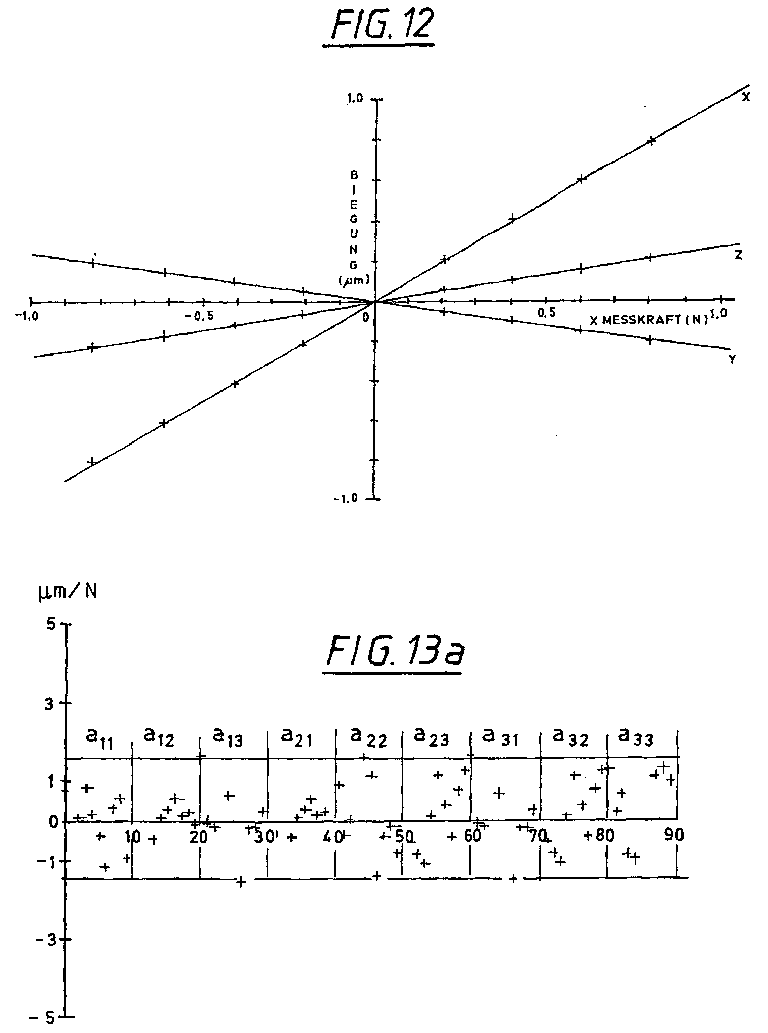

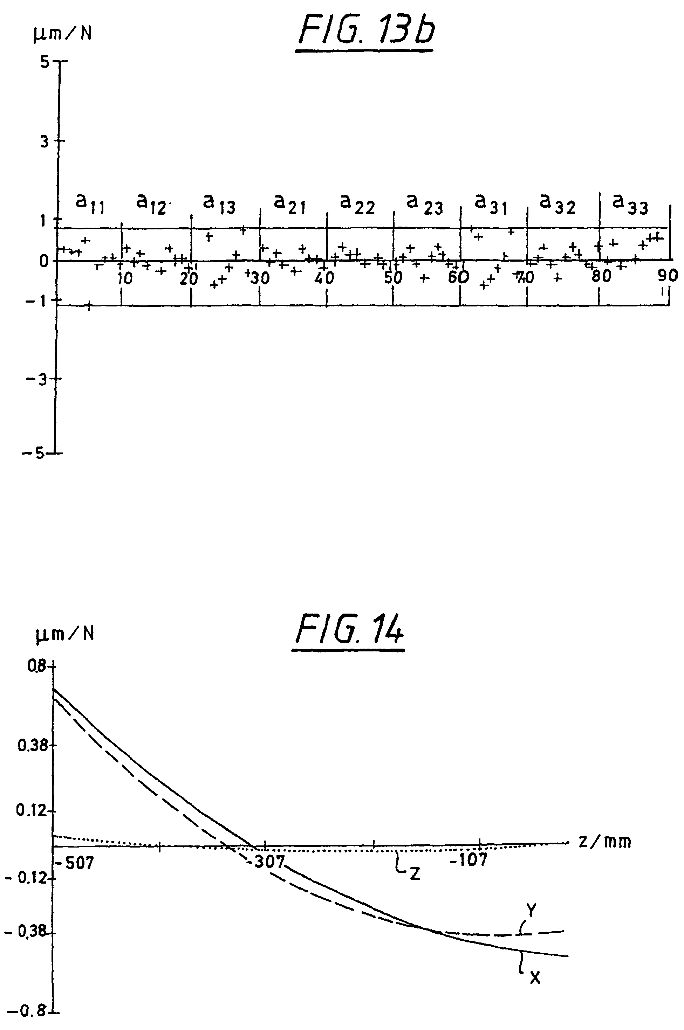

Voraussetzung ist jedoch, daß der Biegetensor möglichst genau bestimmt wird, damit die Ortsabhängigkeit und damit die Maschinenbiegung verläßlich berechnet werden kann. Hierzu wurde ein sehr einfaches Verfahren entwickelt. Danach wird der Biegetensor nicht mehr durch Antasten einer Kalibrierkugel ermittelt. Stattdessen wird ein Kugeltripel (Fig. 11a) oder Walzentripel (Fig. 11b) nach Art einer konkaven Würfelecke an verschiedenen Stellen im Meßbereich des KMG befestigt und dort selbstzentrierend angetastet. Während des Antastvorgangs wird außerdem die Meßkraft variiert und die Veränderung des Meßwertes als Funktion der Meßkraft ermittelt. Im Diagramm nach Figur 12 ist für einen schrägen Taststift die Änderung des Meßwertes in Richtung der drei Koordinaten X, Y und Z durch das Aufschalten von neun verschiedenen Meßkräften in X-Richtung dargestellt. Die Steigung der drei Ausgleichsgeraden ergibt direkt die drei Elemente der ersten Spalte des Biegetensors. Durch Aufschalten von Meßkräften in Y- bzw. Z-Richtung erhält man ähnliche Geradentripel, die dann die Elemente der zweiten und dritten Spalte des Biegetensors ergeben. Dieses Verfahren hat verschiedene Vorteile: Zum einen können die Antriebe der Meßmaschine bei der Bestimmung des Biegetensors still stehen, so daß die Meßwerterfassung relativ schnell erfolgt und dynamische Fehler aufgrund der Maschinenantriebe ausgeschlossen sind. Außerdem ist die Ermittlung der Tensorelemente mathematisch einfach und stabil wegen der direkten Zuordnung der Ausgleichsgeraden zu den Tensorelementen. Eine Iteration ist somit nicht nötig. Schließlich wird über mehrere Meßkräfte gemittelt, wodurch die Genauigkeit der Bestimmung der Tensorelemente zusätzlich erhöht wird. In Figur 13 ist die streuung der einzelnen Tensorelemente dargestellt und zwar einmal für das Verfahren der Bestimmung durch Antastung an einer Kalibrierkugel, und einmal nach dem beschriebenen Verfahren der Eintastung in das Walzentripel nach Figur 11b und Variieren der Meßkraft (Figur 13b). Aufgetragen ist jeweils der Wert der Abweichung vom gemessenen Wert für das Tensorelement der neun Tensorelemente des Biegetensors in µm/N bei jeweils zehn durchgeführten Tensorbestimmungen. Man erkennt, daß die Streuung nach dem neuen Verfahren um 50% geringer ausfällt.

Aus den gemessenen Tensorelementen läßt sich nun die elastische Abweichung des KMG in Y-Richtung in Folge einer in Y-Richtung wirkenden Meßkraft und abhängig von der X-Position des Querschlittens (23) aus der Änderung des Tensorelementes $a_{22}$ über der X-Position bestimmen. Entsprechend ergibt sich die elastische Abweichung in Y-Richtung infolge einer ebenfalls in Y-Richtung wirkenden Meßkraft $F_y$ in Abhängigkeit von der Z-Position der Pinole aus der Änderung des Tensorelements $a_{22}$ über der Z-Position und die elastische Abweichung in X-Richtung infolge einer ebenfalls in X-Richtung wirkenden Meßkraft $F_x$ in Abhängigkeit von der Z-Position aus der Änderung des Tensorelements $a_{11}$ über der Z-Position der Pinole (24) bestimmen. In Figur 14 ist beispielhaft als Ergebnis einer solchen Messung die Steifigkeit der X- und der Y-Achse in µm pro Newton abhängig von der Z-Position der Pinole (24) dargestellt.

Es hat sich gezeigt, daß der Verlauf der Maschinenbiegung sehr gut durch ein Polynom zweiter Ordnung angenähert werden kann. Die Koeffizienten A0, A1 und A2 dieser drei Polynome Y = f(x), X = f(z) und Y = f(z) werden durch eine Besteinpassung ermittelt und als Korrekturwerte in der Mikroprozessorsteuerung (19) des KMG gespeichert.

Bei der Korrektur von Koordinatenmeßwerten an unbekannten Werkstücken werden dann für jeden gemessenen Koordinatenwert entsprechend seiner Lage im Meßvolumen des KMG die Werte der Polynomfunktionen aus den gespeicherten Koeffizienten berechnet, mit der jeweiligen bei der Antastung gemessenen Meßkraft multipliziert und das Produkt mit dem Meßwert zur Korrektur verrechnet.

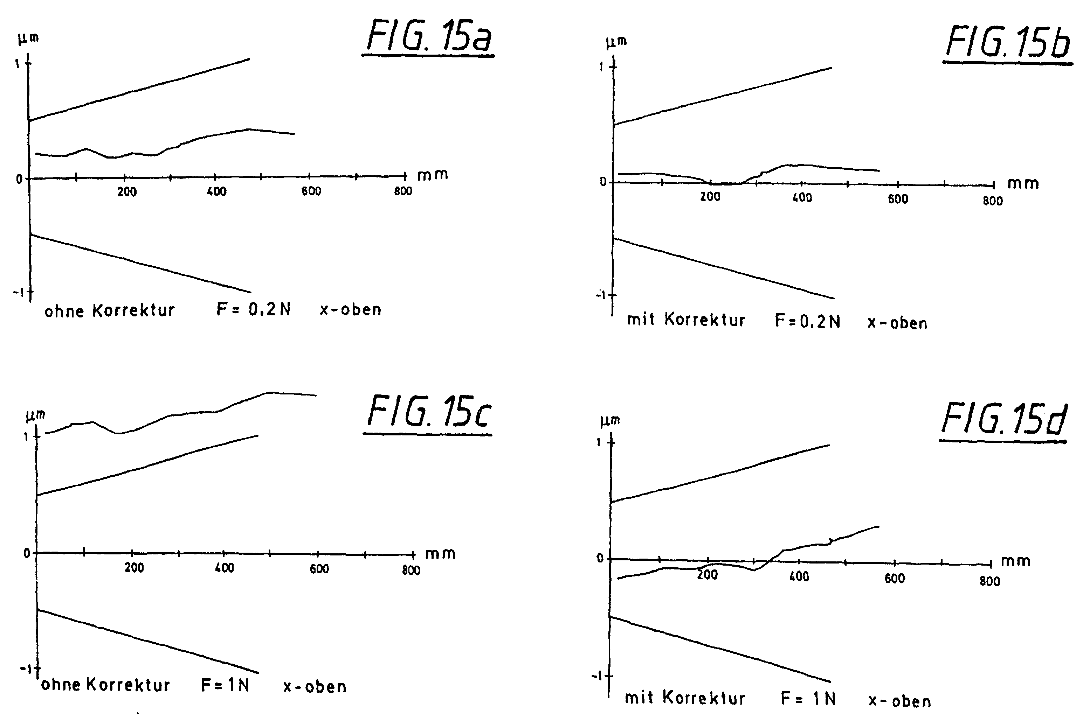

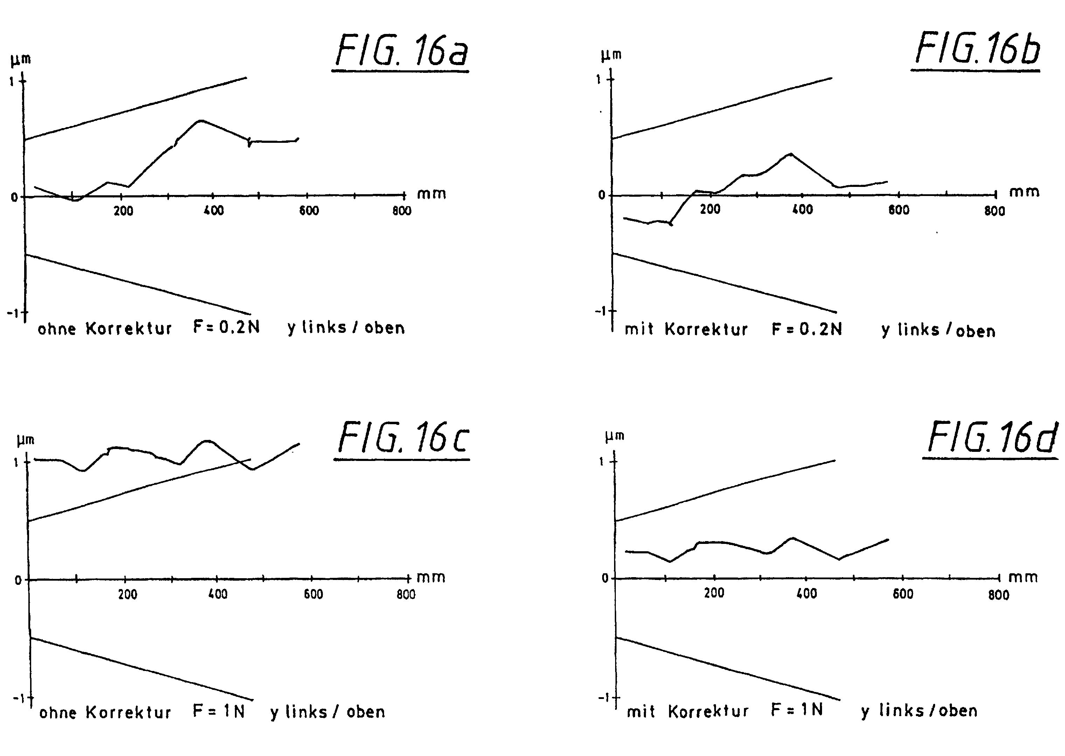

Der Erfolg dieser Korrektur bei einem KMG der Anmelderin vom Portaltyp mit der Bezeichnung UPMC ist aus den Figuren 15a - d und 16a - d ersichtlich. Dort ist jeweils die Längenmeßunsicherheit des KMG ermittelt an einem Stufenendmaß bei unterschiedlichen Meßorten dargestellt und zwar sind die Endmaßabweichungskurven in den Extrempositionen X oben (Fig. 15) und Y links oben (Fig. 16) jeweils bei 0,2 Newton Meßkraft und bei 1 Newton Meßkraft jeweils mit und ohne Korrektur der "elastischen" Fehler einander gegenübergestellt. Diese Endmaßabweichungskurven werden mit einem Zerodurstufenendmaß ermittelt, das in die genannten Meßrichtungen X bzw. Y ausgerichtet wurde.

Die Wirksamkeit der beschriebenen Korrektur der elastischen Fehler des KMG wird deutlich am Versatz der Abweichungskurven, die ohne Biegekorrektur ermittelt wurden, zu denen, bei denen die Korrektur der elastischen Fehler im Auswerteprogramm mit berücksichtigt wurde.

In der Darstellung der Figuren 15 und 16 geben die ansteigenden Geraden die Grenzen des für die Meßunsicherheit des Gerätes spezifizierten Bereiches an. Es ist klar, daß mit dem erfindungsgemäßen Verfahren korrigierten Geräte deutlich besser spezifiziert werden können.

**Patentansprüche**

1. Verfahren zur Koordinatenmessung an Werkstücken mit einem KMG, bei dem die ermittelten Meßwerte mit gespeicherten Korrekturwerten verrechnet werden, wobei die Korrekturwerte das elastische Biegeverhalten des KMG beschreiben, indem:

   - die das Biegeverhalten charakterisierenden Größen für mehrere Stellungen des Tasters im Meßbereich der Maschine bestimmt werden,

     **dadurch gekennzeichnet, daß** zusätzlich

   - die taststiftunabhängigen Anteile dieser Größen ermittelt und in Form von Korrekturwerten abgespeichert werden, die das von der Position der Meßschlitten und zumindest von der auf das Werkstück ausgeübten Meßkraft abhängige Biegeverhalten des KMG beschreiben,
   - die Korrekturwerte bei der anschließenden Koordinatenmessung an Werkstücken mit den Meßwerten des KMG verrechnet werden.

2. Verfahren nach Anspruch 1, wobei die das Biegeverhalten charakterisierenden Korrekturwerte als mehr-dimensionale Korrekturtabelle erstellt und abgespeichert werden.

3. Verfahren nach Anspruch 2, wobei bei der Korrekturrechnung Zwischenwerte zwischen den in der Tabelle gespeicherten Korrekturwerten interpoliert werden.

4. Verfahren nach Anspruch 1, wobei die Positionsabhängigkeit der das Biegeverhalten charakterisierenden Meßwerte durch mathematische Funktionen angenähert wird.

5. Verfahren nach Anspruch 3, wobei die Näherungsfunktionen Polynome sind und deren Koeffizienten für die rechnerische Korrektur der Meßwerte gespeichert werden.

6. Verfahren nach einem der Ansprüche 1 - 5, wobei die gespeicherten Tabellen bzw. Funktionen abhängig vom Parameter Meßkraft sind und die Meßkraft bei der Korrekturrechnung mit einbezogen wird.

7. Verfahren nach einem der Ansprüche 1 - 6, wobei die Korrekturwerte Elemente eines Biegetensors sind und diese Elemente vorab bestimmt werden, indem ein Prüfkörper nacheinander in unterschiedlichen Positionen im Meßbereich des KMG fixiert wird und in den Positionen angetastet wird, wobei die auf den Prüfkörper ausgeübte Meßkraft nach Betrag und Richtung variiert wird.

8. Verfahren nach Anspruch 7, wobei der Prüfkörper ein konkaves Element nach Art einer Würfelecke ist, in das die Tastkugel des KMG eingefahren wird.

9. Verfahren nach Anspruch 1, wobei zusätzlich die statischen Abweichung der Führungen der Meßschlitten des KMG von einem geradlinigen und rechtwinkligen Koordinatensystem ermittelt und daraus weitere Korrekturwerte berechnet und gespeichert werden und diese weiteren Korrekturwerte bei der anschließenden Vermessung von Werkstücken ebenfalls mit den Koordinatenmeßwerten verrechnet werden.

10. Verfahren nach Anspruch 9, wobei die folgenden Verfahrensschritte, jedoch nicht notwendigerweise in der genannten Reihenfolge, durchgeführt werden:

    - Die elastischen Verbiegungen des Koordinatenmeßgerätes werden im Zuge eines ersten Kalibrierverfahrens abhängig von denen auf das KMG ausgeübten Kräften ermittelt und aus den ermittelten Werten wird ein erster Satz von Korrekturwerten errechnet und abgespeichert, der abhängig von der Stellung des Tasters im Meßbereich des KMG und zusätzlich abhängig von den Meßkräften ist, die z.B. das Werkstück während des Antastens auf das KMG ausübt,

-   die statischen Abweichungen der Führungen der Meßschlitten werden im Zuge eines zweiten Kalibrierverfahrens ermittelt und aus diesem ermittelten Führungsabweichungen wird ein zweiter Satz meßkraftunabhängiger Korrekturwerte errechnet und abgespeichert, die ebenfalls abhängig von der Stellung des Tasters im Meßbereich des KMG's sind.

-   Bei der Vermessung von Werkstücken werden beide Sätze von Korrekturwerten mit den von dem Meßsystem des KMG gelieferten Koordinatenmeßwerten verrechnet.

11. Verfahren nach einem der Ansprüche 1 - 10, wobei zusätzlich die dynamischen Abweichungen der Meßschlitten des KMG zum Zeitpunkt der Koordinatenmessung mit Hilfe von Sensoren bestimmt und hieraus ein dritter Satz von Korrekturwerten berechnet wird, der ebenfalls zur Errechnung des korrekten Koordinatenmeßwerts herangezogen wird.

12. Verfahren nach Anspruch 11, wobei die dynamischen Abweichungen der Meßschlitten des KMG in einem Zeitintervall beginnend vor dem Zeitpunkt der Berührung des Werkstücks durch Sensoren aufgenommen werden, die Signale der Sensoren in diesem Zeitintervall ausgewertet werden und daraus auf den Zeitpunkt der Antastung des Werkstücks bezogene Dynamik-Korrekturwerte berechnet werden.

13. Verfahren nach einem der Ansprüche 1 - 12, wobei die tasterunabhängigen Anteile der Korrekturwerte, die das elastische Biegeverhalten des KMG beschreiben, nur für ausgewählte Kombinationen von Kraftrichtungen und Meßrichtungen bestimmt und gespeichert werden.

14. Verfahren nach einem der Ansprüche 1 - 13, wobei die Korrekturwerte, die das elastische Biegeverhalten des Meßgeräts beschreiben, zusätzlich abhängig von den aufgrund der Beschleunigung von den Antrieben auf das KMG ausgeübten Kräfte bestimmt, gespeichert und bei der anschließenden Koordinatenmessung an Werkstücken mit berücksichtigt werden.

15. Koordinatenmessgerät zur Koordinatenmessung an Werkstücken, **dadurch gekennzeichnet, dass** Mittel, vorzugsweise Programm-Mittel, aufweist, um ein Verfahren gemäß einem der Ansprüche 1 bis 14 durchzuführen.

**Claims**

1.  Method for coordinate measurement on workpieces with the aid of a CMM, in the case of which the measured values determined are calculated with the aid of stored correction values, the correction values describing the elastic bending response of the CMM by virtue of the fact that:

    -   the variables characterizing the bending response are determined for a plurality of positions of the probe in the measurement area of the machine,

    **characterized in that**, in addition,

    -   the feeler-independent components of these variables are determined and stored in the form of correction values which describe the bending response of the CMM dependent on the position of the measurement slides and at least on the measuring force exerted on the workpiece, and
    -   the correction values are calculated with the aid of the measured values of the CMM during the subsequent coordinate measurement on workpieces.

2.  Method according to Claim 1, in which the correction values characterizing the bending response are compiled and stored as a multidimensional correction table.

3.  Method according to Claim 2, in which intermediate values are interpolated between the correction values stored in the table during the correction calculation.

4.  Method according to Claim 1, in which the positional dependence of the measured values characterizing the bending response is approximated by mathematical functions.

5. Method according to Claim 3, in which the approximation functions are polynomials and their coefficients are stored for the computational correction of the measured values.

6. Method according to one of Claims 1 - 5, in which the stored tables and/or functions are dependent on the parameter of measuring force, and the measuring force is also included in the correction calculation.

7. Method according to one of Claims 1 - 6, in which the correction values are elements of a bending tensor, and these elements are determined in advance by virtue of the fact that a test piece is successively fixed in different positions in the measurement area of the CMM and is scanned in the positions, the measuring force exerted on the test piece being varied in terms of magnitude and direction.

8. Method according to Claim 7, in which the test piece is a concave element of the type of a cube corner into which the probe sphere of the CMM is moved.

9. Method according to Claim 1, in which in addition the static deviation of the guides of the measurement slides of the CMM from a rectilinear and rectangular coordinate system is determined, and further correction values are calculated therefrom and stored, and these further correction values are likewise calculated with the aid of the coordinate measured values during the subsequent measurement of workpieces.

10. Method according to Claim 9, in which the following method steps are carried out, although not necessarily in the said sequence:

    - the elastic bendings of the coordinate measuring machine are determined in the course of a first calibration method as a function of the forces exerted on the CMM, and there is calculated from the determined values and stored a first set of correction values which is a function of the position of the probe in the measurement area of the CMM and, in addition, is a function of the measuring forces which are exerted, for example, by the workpiece on the CMM during scanning,
    - the static deviations of the guides of the measurement slides are determined in the course of a second calibration method, and there are calculated from these determined guide deviations and stored a second set of correction values, which are independent of measuring force and are likewise a function of the position of the probe in the measurement area of the CMM, and
    - both sets of correction values are calculated during the measurement of workpieces with the aid of the coordinate measured values supplied by the measuring system of the CMM.

11. Method according to one of Claims 1 - 10, in which in addition the dynamic deviations of the measurement slides of the CMM at the instant of the coordinate measurement are determined with the aid of sensors, and from them there is calculated a third set of correction values which is likewise used to calculate the correct coordinate measured value.

12. Method according to Claim 11, in which the dynamic deviations of the measurement slides of the CMM are recorded by sensors in a time interval starting before the instant of contact with the workpiece, the signals of the sensors are evaluated in this time interval, and dynamic correction values referred to the instant of the scanning of the workpiece are calculated therefrom.

13. Method according to one of Claims 1 - 12, in which the probe-independent components of the correction values which describe the elastic bending response of the CMM are determined only for selected combinations of force directions and measuring directions and stored.

14. Method according to one of Claims 1 - 13, in which the correction values which describe the elastic bending response of the measuring machine are additionally determined as a function of the forces exerted on the CMM owing to the acceleration of the drives, and are stored and also taken into account in the subsequent coordinate measurement on workpieces.

15. Coordinate measuring machine for coordinate measurement on workpieces, **characterized in that** it has means, preferably programming means for carrying out a method in accordance with one of Claims 1 to 14.

## EP 0 684 447 B1

**Revendications**

1. Procédé pour la mesure de coordonnées sur des pièces avec un appareil de mesure de coordonnées, avec lequel les valeurs mesurées calculées sont prises en compte avec des valeurs de correction mémorisées, les valeurs de correction décrivant le comportement élastique à la flexion de l'appareil de mesure de coordonnées, de la façon suivante :

   - les grandeurs caractérisant le comportement à la flexion sont calculées pour plusieurs positions du palpeur dans la plage de mesure de la machine,

   **caractérisé en ce qu'**en supplément

   - les parties, indépendantes du palpeur, de ces grandeurs sont déterminées et sont mémorisées sous la forme de valeurs de correction, qui décrivent le comportement à la flexion de l'appareil de mesure de coordonnées qui est dépendant de la position des coulisseaux de mesure et au moins de la force de mesure exercée sur la pièce,
   - les valeurs de correction sont prises en compte lors de la mesure consécutive des coordonnées sur des pièces avec les valeurs mesurées de l'appareil de mesure de coordonnées.

2. Procédé selon la revendication 1, les valeurs de correction caractérisant le comportement à la flexion étant établies et mémorisées sous la forme de tableau de correction pluridimensionnel.

3. Procédé selon la revendication 2, des valeurs intermédiaires étant interpolées lors du calcul de correction entre les valeurs de correction mémorisées dans le tableau.

4. Procédé selon la revendication 1, la dépendance entre les valeurs mesurées caractérisant le comportement à la flexion et la position étant approchée par des fonctions mathématiques.

5. Procédé selon la revendication 3, les fonctions d'approximation étant des polynômes et leurs coefficients étant mémorisés pour la correction mathématique des valeurs mesurées.

6. Procédé selon l'une quelconque des revendications 1 à 5, les tableaux ou fonctions mémorisés étant dépendants du paramètre force de mesure et la force de mesure étant prise en compte lors du calcul de correction.

7. Procédé selon l'une quelconque des revendications 1 à 6, les valeurs de correction étant des éléments d'un tenseur de force et ces éléments étant déterminés auparavant, moyennant quoi un échantillon est fixé de façon successive dans différentes positions dans la plage de mesure de l'appareil de mesure de coordonnées et est palpé dans les positions, la force de mesure exercée sur l'échantillon variant en valeur et en direction.

8. Procédé selon la revendication 7, l'échantillon étant un élément concave comme un angle de cube, dans lequel la boule de palpage de l'appareil de mesure de coordonnées est entrée.

9. Procédé selon la revendication 1, l'écart statique des guides des coulisseaux de mesure de l'appareil de mesure de coordonnées par rapport à un système de coordonnées rectiligne et orthogonal étant en outre calculé et d'autres valeurs de correction étant calculées sur cette base et mémorisées et ces autres valeurs de correction étant prises en compte également avec les valeurs de mesure de coordonnées lors de la mesure consécutif de pièces.

10. Procédé selon la revendication 9, les étapes de procédé suivantes étant effectuées, mais pas nécessairement dans l'ordre de succession cité :

    - les flexions élastiques de l'appareil de mesure de coordonnées sont calculées dans le cadre d'un premier procédé d'étalonnage en fonction des forces exercées sur l'appareil de mesure de coordonnées et à partir des valeurs calculées, on calcule et mémorise un premier ensemble de valeurs de correction qui est dépendant de la position du palpeur dans la plage de mesure de l'appareil de mesure de coordonnées et en supplément dépendant des forces de mesure que par exemple la pièce exerce sur l'appareil de mesure de coordonnées pendant le palpage,
    - les écarts statiques des guides des coulisseaux de mesure sont calculés dans le cadre d'un deuxième procédé d'étalonnage et à partir de ces écarts de guidage calculés, on calcule et on mémorise un deuxième ensemble de valeurs de correction indépendantes de la force de mesure, qui sont également dépendantes de la position du palpeur dans la plage de mesure de l'appareil de mesure de coordonnées,

- lors de la mesure de pièces, on prend en compte les deux ensembles de valeurs de correction avec les valeurs de mesure de coordonnées qui sont fournies par le système de mesure de l'appareil de mesure de coordonnées.

**11.** Procédé selon l'une quelconque des revendications 1 à 10, les écarts dynamiques des coulisseaux de mesure de l'appareil de mesure de coordonnées étant en outre calculés au moment de la mesure des coordonnées à l'aide de capteurs et un troisième ensemble de valeurs de correction étant calculé à partir de là, lequel est utilisé également pour calculer la valeur de mesure de coordonnées correcte.

**12.** Procédé selon la revendication 11, les écarts dynamiques des coulisseaux de mesure de l'appareil de mesure de coordonnées étant enregistrés par des capteurs dans un intervalle de temps en commençant avant l'instant du contact de la pièce, les signaux des capteurs étant analysés dans cet intervalle de temps et des valeurs de correction de dynamique spécifiques à l'instant du palpage de la pièce étant calculées à partir de là.

**13.** Procédé selon l'une quelconque des revendications 1 à 12, les parties indépendantes du palpeur des valeurs de correction, qui décrivent le comportement élastique à la flexion de l'appareil de mesure de coordonnées, étant calculées et mémorisées seulement pour des combinaisons sélectionnées de directions de force et de mesure.

**14.** Procédé selon l'une quelconque des revendications 1 à 13, les valeurs de correction, qui décrivent le comportement élastique à la flexion de l'appareil de mesure, étant en outre déterminées en fonction des forces exercées par les entraînements sur l'appareil de mesure de coordonnées en raison de l'accélération, mémorisées et prises en compte lors de la mesure consécutive de coordonnées sur des pièces.

**15.** Appareil de mesure de coordonnées pour la mesure de coordonnées sur des pièces, **caractérisé en ce qu'**il présente des moyens, de préférence des moyens de programmation, pour appliquer un procédé selon l'une quelconque des revendications 1 à 14.

_FIG. 1_

_FIG. 2_

_FIG. 3_

EP 0 684 447 B1

FIG. 4

FIG. 5a

Parallel versetzt

$t_y = K_{P_y} \cdot F_1$

FIG. 5b

Drehung

$r_x = K_{L_y} \cdot F_1 \cdot z$

FIG. 5c

Scherung

$t_y = K_{S_y} \cdot F_1 \cdot z$

FIG. 5d

Biegung

$r_x = K_{B_x} \cdot F_1 \cdot z^2/2$

$t_y = K_{B_x} \cdot F_1 \cdot z^3/3$

FIG. 6a

Parallel versetzt

$t_z = K_{P_z} \cdot F_2$

FIG. 6b

Dehnung

$t_z = K_z \cdot F_2$

22

## FIG. 7a

Drehung

$$r_x = K_{Ly} \cdot M_1$$

## FIG. 7b

Biegung

$$r_x = K_{Bx} \cdot M_1 \cdot z$$
$$f_y = K_{Bx} \cdot M \cdot z^2/2$$

## FIG. 8a

Drehung

$$r_z = K_{Lz} \cdot M_2$$

## FIG. 8b

Torsion

$$r_z = K_T \cdot M_2 \cdot z$$

## FIG. 9

$F_y^*$, $F_x^*$, $M_z^*$, $F_z^*$, $M_x^*$, $M_y^*$

FIG. 10

FIG. 11a

FIG. 11b

24

## FIG.12

## FIG.13a

## FIG. 13b

## FIG. 14

FIG.15b

FIG.15d

FIG.15a

FIG.15c

EP 0 684 447 B1

## FIG. 16a

μm

ohne Korrektur   F = 0.2N   y links / oben

## FIG. 16b

μm

mit Korrektur   F = 0.2N   y links / oben

## FIG. 16c

μm

ohne Korrektur   F = 1 N   y links / oben

## FIG. 16d

μm

mit Korrektur   F = 1 N   y links / oben